# EUROPÄISCHE PATENTSCHRIFT

(11) **EP 3 078 105 B1**
(45) Veröffentlichungstag und Bekanntmachung des Hinweises auf die Patenterteilung: **25.12.2019**
(21) Anmeldenummer: 14800027.6
(22) Anmeldetag: 18.11.2014
(51) Int. Cl.: H02M 1/32, H02H 7/12, H02H 9/02, H02M 3/335

(54) **STROMVERSORGUNGSEINRICHTUNG UND VERFAHREN ZUR BEGRENZUNG DES AUSGANGSSTROMS DER STROMVERSORGUNGSEINRICHTUNG**
POWER SUPPLY DEVICE AND METHOD FOR LIMITING AN OUTPUT CURRENT OF A POWER SUPPLY DEVICE
SYSTÈME D'ALIMENTATION ÉLECTRIQUE ET PROCÉDÉ DE LIMITATION DU COURANT DE SORTIE D'UN SYSTÈME D'ALIMENTATION ÉLECTRIQUE

(30) Priorität: 06.12.2013 DE 102013113648
(43) Veröffentlichungstag der Anmeldung: 12.10.2016
(73) Patentinhaber: Weidmüller Interface GmbH & Co. KG, 32758 Detmold (DE)
(72) Erfinder: SCHÜRMANN, Klaus, 32791 Lage (DE); BUSCHKAMP, Michael, 32791 Lage (DE)
(74) Vertreter: Kleine, Hubertus
(86) Internationale Anmeldenummer: PCT/EP2014/074839
(87) Internationale Veröffentlichungsnummer: WO 2015/082207

(56) Entgegenhaltungen:
- DE-A1-102005 031 833
- US-A1- 2006 023 383
- US-A1- 2007 103 833

## Beschreibung

Die Erfindung betrifft eine Stromversorgungseinrichtung zum Umwandeln einer Eingangsspannung in eine Ausgangsspannung, die zumindest eine von einer Pulsweitenmodulationsschaltung getaktet angesteuerte Schaltstufe aufweist, wobei eine Regelschaltung vorgesehen ist, die auf die Pulsweitenmodulationsschaltung zur Änderung der Höhe der Ausgangsspannung und zur Begrenzung eines Ausgangsstroms der Stromversorgungseinrichtung einwirkt. Die Erfindung betrifft weiterhin ein Verfahren zum Begrenzen eines Ausgangsstroms einer Stromversorgungseinrichtung.

Bei einer derartigen Stromversorgungseinrichtung wird eine Eingangsspannung mithilfe der Schaltstufe in eine Wechselspannung einer üblicherweise im Kilohertzbereich liegenden Frequenz gewandelt. Diese eingangsseitige höherfrequente Wechselspannung wird, beispielsweise mithilfe eines Transformators, in eine ausgangsseitige höherfrequente Wechselspannung kleineren oder größeren Betrags transformiert und wieder gleich gerichtet. Die Energieversorgungseinrichtung kann dabei als Gleichstromwandler, auch als DC/DC-Wandler (DC-direct current) bezeichnet, ausgebildet sein, bei der eine Gleichspannung als Eingangsspannung in eine Gleichspannung als Ausgangsspannung umgewandelt wird. Die Stromversorgungseinrichtung kann auch als ein sogenanntes Schaltnetzteil ausgebildet sein, bei der eine Netz-Wechselspannung als Eingangsspannung nach Gleichrichtung in eine Ausgangsgleichspannung umgewandelt wird.

Um die von der Stromversorgungseinrichtung bereitgestellte Ausgangsgleichspannung zu stabilisieren, weisen solche Stromversorgungsvorrichtungen einen Regelkreis auf, der die Ausgangsspannung unabhängig von einer angeschlossenen Last auf einen möglichst konstanten Wert regelt. Dies ist über eine Veränderung der Frequenz und/oder der Pulsbreite bzw. des Tastverhältnisses der getakteten Ansteuerung der Schaltstufe in einem Pulsweitenmodulationsverfahren (PWM) möglich. Dazu weist die Energieversorgungseinrichtung eine PWM-Schaltstufe auf, die von dem Regelkreis beeinflusst wird.

Neben der Regelung auf eine möglichst konstante Ausgangsspannung ist im Regelkreis typischerweise auch eine Strombegrenzung implementiert, durch die der gelieferte Ausgangsstrom auf einen vorgegebenen Wert beschränkt wird, indem beim Erreichen des Stromwerts die Ausgangsspannung abgeregelt wird, so dass der vorgegebene Maxstromwert nicht überschritten wird.

Insbesondere bei Stromversorgungseinrichtungen die Anlagen mit hohen Strömen im Bereich von einigen bis einigen zehn Ampere versorgen, ist in der Anlage eine Überstromsicherung vorgesehen, beispielsweise eine Schmelzsicherung oder ein z.B. thermisch und/oder magnetisch arbeitender Überlastschalter oder eine Kombination derartiger Sicherungsorgane. Durch die Überstromsicherung wird ein Überhitzen von Bauelementen und/oder Zuleitungen, insbesondere in einem Fehlerfall verhindert. Schmelzsicherungen und auch die genannten thermische oder magnetisch arbeitenden Überlastschalter sind jedoch zum einen sehr träge und benötigen zum anderen Auslöseströme, die ein Mehrfaches des nominellen Stroms (Nennstrom), für den die Sicherung geeignet ist, betragen können. Netzteile mit einem unmittelbar am Stromversorgungnetz und bei der Netzfrequenz arbeitenden Transformator sind üblicherweise in der Lage, zumindest für eine ausreichende Zeit einen hinreichend hohen, um ein vielfaches über dem Nennstrom liegenden Ausgangsstrom zu liefern, durch den ein sicheres Auslösen der Sicherung gewährleistet ist.

Aus den Druckschriften US 2007/0103833 A1 und US 2006/0023383 A1 sind elektronische Schutzschaltungen mit Halbleiterschaltorganen bekannt, die eine Auslösecharakteristik einer Schmelzsicherung nachbilden. Insbesondere wird eine sogenannte I²t-Charakteristik nachgebildet, bei der das Auslöseverhalten abhängig vom Quadrat eines fließenden Stroms ist.

Bei den Stromversorgungseinrichtungen der eingangs genannten Art ist die Strombegrenzung zum Schutz einer thermischen Überlastung des Schaltnetzteils jedoch üblicherweise auf das etwa 1,1-fache bis 1,5-fache des nominalen Ausgangsstroms eingestellt. Zudem arbeitet die Strombegrenzung des Schaltnetzteils so schnell, dass ohne weitere Vorkehrungen die nachgeschalteten Sicherungsorgane zu spät oder nicht gesichert ausgelöst werden.

Um auch mit einer getakteten Stromversorgungseinrichtung beispielsweise eine nachgeschaltete Schmelzsicherung oder einen nachgeschalteten thermisch oder magnetisch arbeitenden Überlastschalter sicher auslösen zu können, ist aus der Druckschrift DE 10 2005 031 833 A1 eine Stromversorgungseinrichtung bekannt, bei der für eine vorbestimmte Zeit ein sehr hoher Ausgangsstrom, der beispielsweise bei dem fünf- bis zehn-fachen des Nennstroms liegt, geliefert werden kann, bevor nach Ablauf der vorbestimmten Zeit die Strombegrenzung auf einen niedrigeren Wert von beispielsweise dem 1,1-bis 1,5-fachen des Nennstroms zurückgefahren wird. Der höhere Maximalstrom in der vorbestimmten Zeit steht dabei für das sichere Auslösen einer nachgeschalteten Schmelzsicherung bzw. eines nachgeschalteten Überlastschalters zur Verfügung. Nach Ablauf der vorbestimmten Zeit wird nur der gegenüber dem Nennstrom leicht erhöhte Maximalstrom dauerhaft geliefert. Durch die Abregelung auf den leicht erhöhten Maximalstrom wird eine thermische Überlastung der Stromversorgungseinrichtung verhindert, falls ein nachgeschaltetes Sicherungsorgan nicht vorhanden ist oder nicht ausgelöst hat. Letzteres kann insbesondere dann eintreten, wenn in einem Fehlerfall zwar ein erhöhter Strom fließt, der jedoch nicht so hoch ist, dass die vorbestimmte Zeit ausreichend zum Auslösen der Sicherung ausreicht. Dieses führt zu einem unerwünschten Betriebszustand, in dem der erhöhte Strom dauerhaft weiter an die Anlage geliefert wird.

Es ist daher eine Aufgabe der vorliegenden Erfindung, eine Stromversorgungseinrichtung mit einer getakteten Schaltstufe bereitzustellen, bei der das Auslösen einer nachgeschalteten Überstromsicherung auch in solchen Überstromfällen, in denen die externe Überstromsicherung innerhalb der vorbestimmten Zeit nicht zur Auslösung gebracht werden konnte, gegeben ist.

Diese Aufgabe wird gelöst durch eine Stromversorgungseinrichtung und ein Verfahren zum Begrenzen eines Ausgangsstroms einer Stromversorgungseinrichtung mit den jeweiligen Merkmalen der unabhängigen Ansprüche. Vorteilhafte Ausgestaltungen und Weiterbildungen sind Gegenstand der abhängigen Ansprüche.

Bei einer erfindungsgemäßen Stromversorgungseinrichtung der eingangs genannten Art ist die Regelschaltung so eingerichtet, dass der Zeitraum, für den der Ausgangsstrom auf den erhöhten Maximalstrom begrenzt ist, von der Höhe des Ausgangsstroms abhängig ist. Der zum Auslösen einer nachgeschalteten Überstromsicherung fließende erhöhte Maximalstrom steht somit nicht für einen vorgegebenen Zeitraum - und damit möglicherweise zu kurz - zur Verfügung, sondern situationsbedingt für einen Zeitraum, dessen Dauer abhängig von der Höhe des im Überstromfall fließenden Stroms ist. Der erhöhte Maximalstrom liegt dabei bevorzugt zwischen dem 5- fachen und dem 10-fachen eines Nennstroms der Stromversorgungseinrichtung und der reguläre Maximalstrom in etwa zwischen dem 1,1-fachen und dem 1,5-fachen des Nennstroms.

Dabei ist der Zeitraum umso länger, je kleiner die Differenz des Ausgangsstroms zum Schwellenwert, der den Überstromfall definiert, während des Zeitraums ist. Der Schwellenwert kann beispielsweise auf den Wert des regulären Maximalstroms gesetzt sein. Ein nicht so hoher Ausgangsstrom kann bei dieser Ausgestaltung im Fehlerfall länger fließen, bis die Stromversorgungseinrichtung vom erhöhten Maximalstrom auf den regulären Maximalstrom abregelt. Die sich ergebende Zeitcharakteristik des Maximalstroms kommt einer Auslösung einer Schmelzsicherung oder eines thermisch oder magnetisch arbeitenden Überlastschalters, die oder der der Stromversorgungseinrichtung nachgeschaltet ist, zugute. Bei einem sehr hohen, beispielsweise dem 10-fachen Nennstrom der Sicherung entsprechenden Strom, wird eine kürzere Zeit zur Auslösung der Sicherung benötigt, als bei einem geringeren, beispielsweise nur dem 5-fachen Nennstrom der Sicherung entsprechenden Strom. Da die thermische Belastung für die Stromversorgungseinrichtung bei einem weniger hohen Maximalstrom geringer ist, als bei einem höheren Maximalstrom, kann die Stromversorgungseinrichtung diese Zeitcharakteristik bieten, ohne dass die Gefahr einer thermischen Überlastung der Stromversorgungseinrichtung während der Lieferung des erhöhten Maximalstroms besteht.

Die Zeitcharakteristik der Strombegrenzerschaltung ermöglicht auch das Treiben von Lasten mit hohem Anlaufstrom wie dies typischerweise bei Motorlasten oder kapazitiven Lasten gegeben ist. Ein Motoranlaufstrom im Bereich von beispielsweise dem 2,5-fachen des Nennstromes der Stromversorgungseinrichtung kann dann im Vergleich zum Kurzschlussfall mit einem Überstrom der beispielsweise 10-fachen Höhe des Nennstroms entsprechend länger geliefert werden.

Die Stromversorgungseinrichtung kann ebenso ein DC/DC-Wandler wie auch ein AC/DC-Wandler, also z.B. ein Schaltnetzteil sein. Letzteres kann zum Anschluss an ein-oder mehrphasige Netze, z.B. 3-phasige Netze ausgebildet sein. Die Eingangsspannungen können im Bereich von 10-800 Volt (V) liegen; Nennströme im Bereich von einigen bis einigen zehn Ampere (A). Es kann vorgesehen sein, dass der erhöhte Maximalstrom mithilfe eines Energiespeichers geliefert wird, beispielsweise eines Kondensators. Die Stromversorgungseinrichtung kann jedoch im Hinblick auf die Strombelastbarkeit so ausgebildet sein, dass die Leistung zur Bereitstellung des Ausgangsstroms unmittelbar am Eingang der Stromversorgungseinrichtung aufgenommen wird.

Die Stromversorgungseinrichtung weist eine erste Vergleichsstufe auf, die eine zum Ausgangsstrom proportionale Spannung mit einem ersten Vergleichswert vergleicht, wobei der erste Vergleichswert der Höhe des aktuellen Maximalstroms entspricht. Auf diese Weise wird zunächst eine Strombegrenzung auf einen Maximalstrom realisiert. Weiter weist die Stromversorgungseinrichtung eine Integratorschaltung auf, über die die zum Ausgangsstrom proportionale Spannung gefiltert einer zweiten Vergleichsstufe zugeführt wird, die die gefilterte Spannung mit einem zweiten Vergleichswert vergleicht, der dem regulären Maximalstrom entspricht, wobei ein Ausgang der zweiten Vergleichsstufe derart mit der ersten Vergleichsstufe gekoppelt ist, dass er die Höhe des ersten Vergleichswerts beeinflusst. Als Folge wird der eingestellte Maximalstrom nach einem "Auffüllen" eines Integrationsglieds der Integratorschaltung von dem erhöhten auf den regulären Maximalwert abgesenkt. Die Integration führt zu einem dynamischen Anpassen des Zeitraums, für den der erhöhte Maximalstrom bereitgestellt wird, an die Höhe des im Fehlerfall fließenden Stroms.

Bevorzugt weist die Integratorschaltung einen Kondensator als Integrationsglied auf und zumindest einen Lade- und/oder Entladewiderstand in einer Tiefpassanordnung. Dabei kann ein Ladewiderstand mit einer in Reihe geschalteten Diode und ein Entladewiderstand mit einer in Reihe geschalteten weiteren Diode vorgesehen sein, wobei die beiden Reihenschaltungen im Hinblick auf die Diode bzw. die weitere Diode antiparallel zueinander geschaltet sind. Über den Lade- und/oder Entladewiderstand wird die Zeitcharakteristik der Strombegrenzung eingestellt. Dabei kann ein gemeinsamer Lade- und Entladewiderstand verwendet werden, aber auch ein getrennter Ladewiderstand und ein Entladewiderstand, wobei jeweils durch eine Reihenverschaltung mit der Diode bzw. der weiteren Diode die Stromrichtung im Widerstand und damit seine Funktion (Aufladen/Entladen) bestimmt wird.

Wenn, entweder durch Auslösen der nachgeschalteten Sicherung oder durch ein Beheben des Fehlerfalls, der Ausgangsstrom am Ausgang der Stromversorgungseinrichtung wieder unter den regulären Maximalstrom abfällt, erfolgt eine Entladung des Kondensators über den Entladewiderstand. Erst wenn der Kondensator wieder unter den zweiten Vergleichswert entladen ist, steht in einem nächsten Fehlerfall wiederum zunächst der erhöhte Maximalstrom zur Verfügung. Die Zeitkonstante für die Entladung kann durch Wahl des Entladewiderstands so gewählt sein, dass eine zweite Lieferung eines erhöhten Maximalstroms durch die Stromversorgungseinrichtung erst dann erfolgen kann, wenn sich die Stromversorgungseinrichtung auch wieder ausreichend abgekühlt hat. Die Zeitkonstante für das Entladen des Kondensators ist daher bevorzugt an typische Zeitkonstanten des Abkühlens der Stromversorgungseinrichtung angepasst. In einer weiteren bevorzugten Ausgestaltung ist in der Reihenschaltung des Entladewiderstand und der weiteren Diode zusätzlich ein temperaturabhängiger Widerstand, insbesondere ein PTC (positive temperature coefficient)-Widerstand, angeordnet. Auf diese Weise wird die Zeitkonstante für das Entladen des Kondensators temperaturabhängig ausgebildet. Bei einer höheren Temperatur der Stromversorgungseinrichtung bzw. des Bauelements, mit dem der temperaturabhängige Widerstand in thermischem Kontakt steht, wird die Zeitkonstante für das Entladen des Kondensators verlängert, wodurch sich bei erhöhter Temperatur der Stromversorgungseinrichtung die Regenerationszeit, innerhalb der kein erhöhter Maximalstrom geliefert wird, verlängert.

Ein erfindungsgemäßes Verfahren zum Begrenzen eines Ausgangsstroms einer Stromversorgungseinrichtung weist die folgenden Schritte auf: Es wird eine Strombegrenzung für den Ausgangsstrom auf einen erhöhten Maximalstrom eingestellt. Wenn ein über einem Schwellenwert liegender Ausgangsstrom erfasst wird, wird der über dem Schwellenwert, aber unterhalb der Höhe des erhöhten Maximalstroms liegende Ausgangsstrom für einen Zeitraum geliefert, dessen Länge von der Höhe des erfassten Ausgangsstroms abhängt. Danach wird die Strombegrenzung für den Ausgangsstrom auf einen regulären Maximalstrom eingestellt, der kleiner ist als der erhöhte Maximalstrom. Nach einem weiteren Zeitraum wird die Strombegrenzung wiederum auf den erhöhten Maximalstrom gesetzt. Das Verfahren kann insbesondere bei der zuvor beschriebenen Stromversorgungseinrichtung durchgeführt werden. Es ergeben sich die im Zusammenhang mit der erfindungsgemäßen Stromversorgungseinrichtung beschriebenen Vorteile.

Bevorzugt kann die Dauer des weiteren Zeitraums von der Höhe des erfassten Ausgangsstroms während der Zeit abhängen, in der die Strombegrenzung auf den regulären Maximalstrom eingestellt ist. Weiter bevorzugt kann die Dauer des weiteren Zeitraums von einer in der Stromversorgungseinrichtung gemessenen Temperatur abhängen.

In einer vorteilhaften Ausgestaltung des Verfahrens erfolgt die Dauer des Zeitraums und ggf. des weiteren Zeitraums durch eine Integration einer den Ausgangsstrom repräsentierenden Spannung. Aus der Integration ergibt sich auf einfache Weise eine geeignete Zeitcharakteristik für die Abhängigkeit der Dauer des Zeitraums bzw. des weiteren Zeitraums von der Höhe des fließenden Stroms. Auch ein über die Dauer des Zeitraums nicht konstanter Strom wird berücksichtigt. Die Integration über den Strom beschreibt im Wesentlichen auch die thermischen Belastung, der die Stromversorgungseinrichtung während des Überstromfalls ausgesetzt ist. Die Dauer des Zeitraums, in der ein über dem regulären Maximalstrom liegender Strom geliefert werden kann, kann somit an die sich in diesem Zeitraum einstellende Temperatur der Stromversorgungseinrichtung bzw. ihrer temperaturkritischen Bauelemente angepasst werden.

Im Folgenden ist die Erfindung anhand von Ausführungsbeispielen mithilfe von Figuren näher beschrieben. Die Figuren zeigen:
- Fig. 1: ein schematisches Schaltbild einer Energieversorgungseinrichtung;
- Fig. 2: ein detailliertes Schaltbild eines Teils einer Regelschaltung der Stromversorgungseinrichtung in einem Ausführungsbeispiel; und.
- Fig. 3: ein detailliertes Schaltbild eines Teils einer Regelschaltung der Stromversorgungseinrichtung in einem weiteren Ausführungsbeispiel.

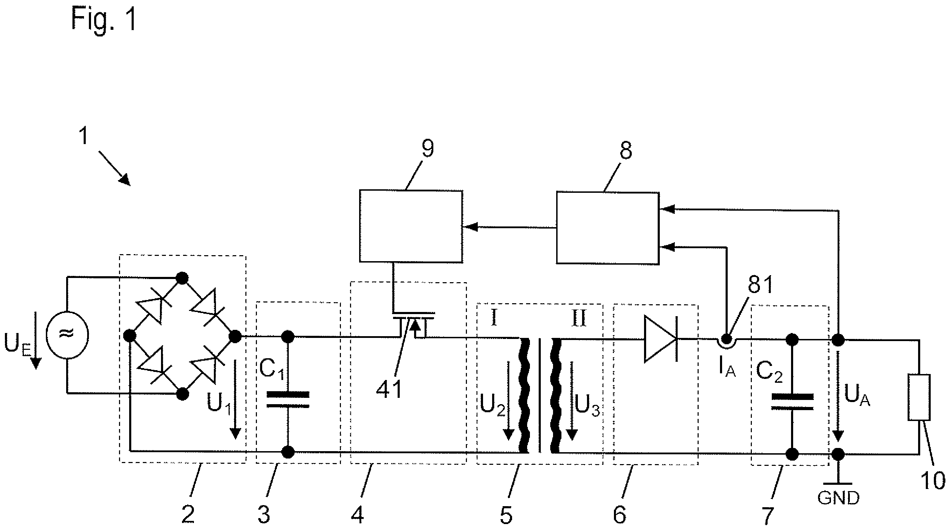

In Fig. 1 ist ein Schaltnetzteil 1 als Beispiel für eine Stromversorgungseinheit in einem Blockschaltbild dargestellt. Das Schaltnetzteil 1 der Fig. 1 ist zum Wandeln einer Eingangsspannung U_{E}, hier einer Eingangswechselspannung, in eine Ausgangsspannung U_{A}, hier eine Ausgangsgleichspannung, vorgesehen.

Die Eingangsspannung U_{E} wird durch einen Gleichrichter 2 in eine pulsierende Gleichspannung U₁ gewandelt, die mittels einer Glättungsbaugruppe 3 geglättet und/oder gesiebt wird. Dafür weist die Glättungsbaugruppe 3 einen ersten Glättungskondensator C₁ auf. Als den Gleichrichter 2 kann alternativ auch eine aktive Leistungsfaktor-Korrektur Schaltung (PFC - power factor correction) zum Einsatz kommen.

Mit der Gleichspannung U₁ wird über eine Schaltstufe 4 mit einem Schaltorgan 41 eine primärseitigen (I) Wicklung eines Transformators 5 getaktet beaufschlagt. Mit der Schaltstufe 4 wird die Gleichspannung U₁ so in eine höherfrequente Wechselspannung U₂ gewandelt, die eine Frequenz aufweist, die deutlich größer ist, als die Frequenz der Eingangswechselspannung U_{E}.

Die Wechselspannung U₃ wird mit dem Transformator 5 in eine sekundärseitige (II) höherfrequente Wechselspannung U₃ kleineren (oder in bestimmten Anwendungsfällen auch größeren) Betrages gewandelt. Anschließend wird die sekundärseitige höherfrequente Wechselspannung U₃ nochmals in einem sekundärseitigen Gleichrichter 6 in eine sekundärseitige Gleichspannung gleichgerichtet und in einer sekundärseitigen Glättungsbaugruppe 7 geglättet und/oder gesiebt. Dafür weist die sekundärseitige Glättungsbaugruppe 7 hier beispielhaft einen weiteren Glättungskondensator C₂ auf. Prinzipiell sind aber auch komplexere Schaltungen aus mehreren insbesondere diskreten Bauteilen (nicht gezeigt) für die sekundärseitige Glättungsbaugruppe 7 bevorzugt.

Die Ausgangsspannung der sekundärseitigen Glättungsbaugruppe 7 ist die hier positive Ausgangsspannung U_{A} des Netzteils 1 gegenüber einem Bezugspotential GND.

Damit die Ausgangsspannung U_{A} auch bei sich ändernder Last 10 stabil ist, ist eine Regelschaltung 8 vorgesehen, die die Ausgangsspannung U_{A} mit einer Referenzspannung vergleicht und abhängig von dem Vergleich auf eine Pulsweitenmodulations (PWM)- Schaltung 9 einwirkt. Die PWM-Schaltung 9 steuert die Schaltstufe 4 an und verändert entsprechend der Vorgaben der Regelschaltung 8 die Taktparameter, insbesondere ein Taktverhältnis, ggf. aber auch eine Taktfrequenz, der Schaltstufe 4, wodurch die Ausgangsspannung U_{A} beeinflusst wird. Es wird so ein Regelkreis gebildet, durch den die Ausgangsspannung U_{A} auf einem gewünschten, vorgegebenen Wert gehalten wird.

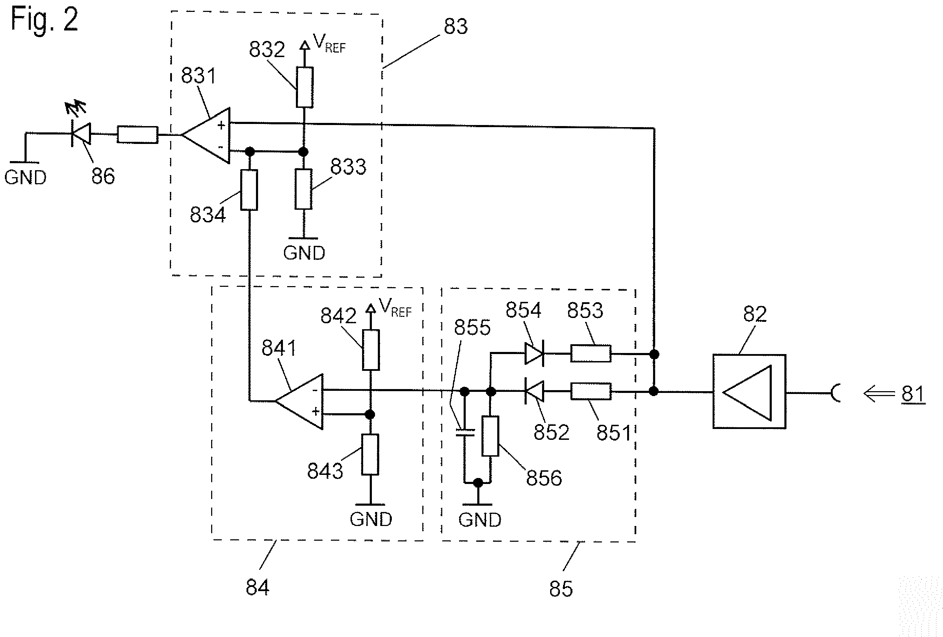

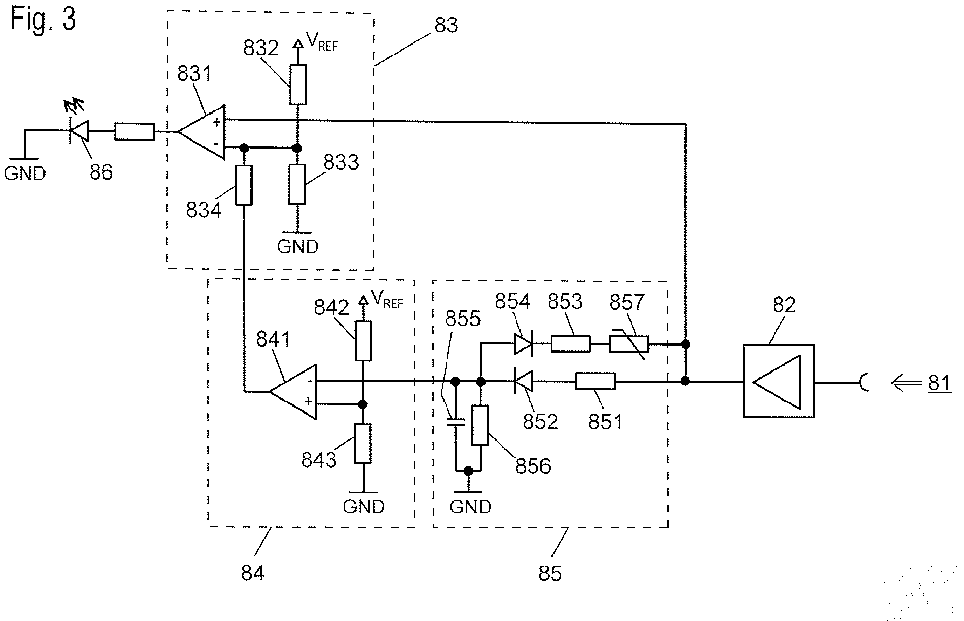

Neben dieser Spannungsregelung ist zusätzlich eine Stromregelung derart vorgesehen, dass ein am Ausgang des Schaltnetzteils 1 fließender und an die Last 10 abgegebener Strom I_{A} durch einen Stromsensor 81 gemessen wird und die Regelschaltung dazu eingerichtet ist, den Strom I_{A} durch Absenken der Spannung U_{A} auf einen vorgebbaren Maximalstrom zu begrenzen. Der Stromsensor 81 kann dabei wie dargestellt vor der Glättungsbaugruppe 7 oder auch zwischen dieser und der Last 10 angeordnet sein, ohne dass sich dadurch eine prinzipiell unterschiedliche Funktionsweise ergibt. Details zu der Strombegrenzung durch die Regelschaltung 8 werden nachfolgend im Zusammenhang mit den Fig. 2 und 3 erläutert.

Ein solches Schaltnetzteil 1 weist häufig zudem ein Filter (nicht gezeigt) auf, mit dem die Eingangswechselspannung U_{E} vor dem Gleichrichten gefiltert wird, um Oberwellen, Überspannungen und/oder Netzstörungen auszufiltern.

Sekundärseitig kann der Transformator 5 zudem mehrere Sekundärwicklungen (nicht gezeigt) aufweisen, mit denen sekundärseitige Wechselspannungen verschiedener Höhe erzeugbar sind. Bei dieser Ausbildung des Schaltnetzteils 1 sind dann mehrere Gleichrichter 6 und Glättungsbaugruppen 7 jeweils für die verschiedenen sekundärseitigen Wechselspannungen vorgesehen.

Fig. 2 zeigt einen Ausschnitt aus der Regelschaltung 8 des Schaltnetzteils 1 detaillierter. Dargestellt ist die Schaltung zur Strombegrenzung innerhalb der Regelschaltung 8. Die Schaltung zur Spannungsregelung bei einem derartigen Schaltnetzteil ist grundsätzlich bekannt und wird von daher innerhalb dieser Anmeldung nicht näher beschrieben.

Die Regelschaltung 8 weist einen Auswerteverstärker 82 für das Signal des Stromsensors 81 auf. Der Auswerteverstärker 82 ist mit dem Stromsensor 81 verbunden und weist einen Ausgang auf, an dem eine zum gemessenen Strom I_{A} proportionale Spannung ausgegeben wird. Als Stromsensor 81 kann dabei ein Shunt-Widerstand fungieren, wobei die am Shunt-Widerstand abfallende Spannung ein Maß für den fließenden Strom I_{A} ist. Alternativ kann auch ein Hall-Sensor zur Strommessung verwendet werden.

Das von dem Auswerteverstärker 82 ausgegebene Spannungssignal wird einer ersten Vergleichsstufe 83 zugeführt, die einen Operationsverstärker 831 als Vergleicher aufweist. Das dem Ausgangsstrom I_{A} proportionale Signal wird dem nicht invertierenden Eingang des Operationsverstärkers 831 zugeführt, wohingegen der invertierende Eingang mit einer ersten Vergleichsspannung beaufschlagt ist, die vorliegend aus einer Referenzspannung U_{ref} und einem Spannungsteiler generiert wird. Dazu ist der invertierende Eingang des Operationsverstärkers 831 zum einen über einen Widerstand 832 mit einer Referenzspannungsquelle verbunden und zum anderen über einen weiteren Widerstand 833 mit dem Bezugspotential GND.

Weiterhin ist der invertierende Eingang des Operationsverstärkers 831 über einen weiteren Widerstand 834 mit einem Ausgang einer zweiten Vergleichsstufe 84 verbunden. Es wird zunächst davon ausgegangen, dass der Ausgang der zweiten Vergleichsstufe 84 auf einem gegenüber dem Bezugspotential GND positiven Bezugspotential liegt. In diesem Fall ergibt sich das Potential am invertierenden Eingang des Operationsverstärkers 831 aus der Referenzspannung U_{ref} über den Widerstand 832 bzw. dem genannten positiven Potential und dem weiteren Widerstand 834 einerseits, und dem weiteren Widerstände 833 andererseits. Die Widerstandswerte bzw. Potentiale sind dabei so gewählt, dass am Ausgang des Operationsverstärkers 831 - und damit der ersten Vergleichsstufe 83 - sich ein positives Potential dann einstellt, wenn der Ausgangsstrom I_{A} des Schaltnetzteils 1 größer oder gleich einem vorgegebenen erhöhten Maximalstrom I'ₘₐₓ ist. Der Strom I'ₘₐₓ wird dabei als ein hoher Strom im Bereich des fünf- bis zehn-fachen eines Ausgangsnennstroms Iₙₑₙₙ des Schaltnetzteils 1 gewählt.

Wenn am Ausgang des ersten Operationsverstärkers 831 ein positives Potential anliegt, wird über einen in der Figur nicht näher bezeichneten Vorwiderstand eine Leuchtdiode eines Optokopplers 86 angesprochen, wobei der Optokoppler 86 auf den hier nicht dargestellten Spannungsregelungszweig der Regelschaltung 8 einwirkt und zu einer Abnahme der Ausgangsspannung U_{A} führt. Das Schaltnetzteil 1 ist auf diese Weise durch den ersten Regelkreis 83 über den Optokoppler 86 auf den erhöhten Maximalstrom I'ₘₐₓ begrenzt.

Die zweite Vergleichsstufe 84 weist ebenfalls einen Operationsverstärker 841 als Vergleicher auf, dem an einem nicht invertierenden Eingang ein zweiter Vergleichswert zugeführt wird. Dieser zweite Vergleichswert ist aus der Referenzspannung U_{ref} durch einen Spannungsteiler mit Widerständen 842 und 843 gegenüber dem Bezugspotential GND gebildet. Der damit zu vergleichende Wert wird dem invertierenden Eingang des Operationsverstärkers 841 zugeführt.

Die zweite Vergleichsstufe 84 stellt an ihrem Ausgang den bereits genannten positiven Spannungswert bereit, wenn die Eingangsspannung der zweiten Vergleichsstufe 84 unterhalb des zweiten Vergleichswertes liegt. Übersteigt die Spannung am Eingang der zweiten Vergleichsstufe 84 den zweiten Vergleichswert, so wird am Ausgang der zweiten Vergleichsstufe 84 ein negatives Potential oder, abhängig von der Versorgungsspannung des Operationsverstärkers 841, das Bezugspotential GND ausgegeben. Von dem Potential am Ausgang der zweiten Vergleichsstufe 84 ist über den Widerstand 834 der erste Vergleichswert am invertierenden Eingang des Operationsverstärkers 831 der ersten Vergleichsstufe 83 abhängig.

Konkret wird bei einem Überschreiten des zweiten Vergleichswertes am Eingang der zweiten Vergleichsstufe 84 die Strombegrenzung von dem vorgegebenen erhöhten Maximalstrom I'ₘₐₓ auf einen regulären Maximalstrom I'ₘₐₓ abgesenkt. Durch die Zusammenschaltung der beiden Vergleichsstufen 83, 84 wird also eine Begrenzung des Ausgangsstroms I_{A} entweder auf den erhöhten Maximalstrom I'ₘₐₓ oder auf den regulären Maximalstrom I'ₘₐₓ bewirkt. Der reguläre Maximalstrom I'ₘₐₓ kann dabei durch die Wahl der Widerstandswerte der Widerstände 832, 833 und 834 sowie die am Ausgang des Operationsverstärkers 841 der zweiten Vergleichsstufe 84 anliegenden Potentiale festgelegt werden. Der reguläre Maximalstrom I'ₘₐₓ wird dabei vorteilhaft auf einen Wert eingestellt, der im Bereich des 1,1- bis etwa 1,5-fachen des Ausgangsnennstroms Iₙₑₙₙ des Schaltnetzeils 1 liegt.

Die Umschaltung zwischen den beiden Maximalströmen I'ₘₐₓ, I'ₘₐₓ wird über eine Integratorschaltung 85 vorgenommen, die dem Eingang der zweiten Vergleichsstufe 84 vorgeschaltet ist. Eingangsseitig ist die Integratorschaltung 85 mit dem Ausgang des Auswerteverstärkers 82 verbunden, wird also wie der Eingang der ersten Vergleichsstufe 83 mit der zum Ausgangsstrom I_{A} proportionalen Spannung beaufschlagt.

Die Integratorschaltung 85 weist einen mit dem Eingang verbundenen Ladewiderstand 851 auf, der über eine Diode 852 auf einen mit dem Bezugspotential GND verbundenen Kondensator 855 geschaltet ist. Parallel zu dem Ladewiderstand 851 und der Diode 852 ist ein Zweig mit einer Serienschaltung aus einem Entladewiderstand 853 und einer weiteren Diode 854 geschaltet. Die weitere Diode 854 ist in ihrer Richtung gegengesetzt zur Diode 852 angeordnet. Die Integratorschaltung 85 ist damit wie eine Tiefpassschaltung aufgebaut, wobei jedoch ein Aufladen des Kondensators 855 und damit des Ausgangs der Integratorschaltung 85 auf einen gegenüber dem Bezugspotential GND positives Potential über den Ladewiderstand 851 und ein Entladen des Kondensators 855 über den Entladewiderstand 853 erfolgt. Es können durch Wahl der Widerstandswerte der Widerstände 851 bzw. 853 verschiedene Zeitkonstanten für das Auf- und das Entladen des Kondensators 855 gewählt werden. Grundsätzlich wäre auch eine Schaltung mit nur einem gemeinsamen Lade- und Entladewiderstand möglich, wodurch sich gleiche Zeitkonstanten für das Auf- und das Entladen des Widerstands ergeben würden. Zusätzlich ist parallel zum Kondensator 855 ein weiterer Entladewiderstand 856 angeordnet, der einen gegenüber dem Ladewiderstand 851 und dem Entladewiderstand 853 hohen Widerstandswert aufweist, und im Wesentlichen einer Entladung des Kondensators 855 auch bei ausgeschalteten Schaltnetzteil 1 dient.

Der Ausgang der Integratorschaltung 85 folgt im Betrieb des Schaltnetzteils 1 im Wesentlichen der am Ausgang des Auswerteverstärkers 82 abgegebenen und den Ausgangsstrom I_{A} widerspiegelnden Spannung. In einem Fehlerfall, beispielsweise einem Kurzschlussfall am Ausgang des Schaltnetzteils 1, steigt der Ausgangsstrom I_{A} von einem Wert unterhalb des Ausgangsnennstroms Iₙₑₙₙ maximal auf den erhöhten Maximalwert I'ₘₐₓ, der bei der ersten Vergleichsstufe 83 eingestellt ist, da die Spannung am Ausgang der Integratorschaltung 85 zunächst kleiner als die zweite Vergleichsspannung ist.

Diese Spannung am Ausgang der Integratorschaltung 85 folgt dem Spannungssprung am Ausgang des Auswerteverstärkers 82 nur langsam, nämlich mit der durch den Widerstandswert des Ladewiderstands 851 und die Kapazität des Kondensators 855 gegebenen Zeitkonstante. Solange der Ausgang der Integratorschaltung 85 noch unterhalb des zweiten Vergleichswerts liegt, ist die Strombegrenzung auf den erhöhten Maximalwert I'ₘₐₓ gesetzt. Nach Übersteigen des zweiten Vergleichswerts wird die Strombegrenzung auf den regulären Maximalstrom I'ₘₐₓ abgesenkt. In diesem Zustand verbleibt das Schaltnetzteil gegebenenfalls dauerhaft.

Wenn im Fehlerfall der Ausgangsstrom I_{A} zwar auf einen Stromwert ansteigt, der über dem regulären Maximalstrom I'ₘₐₓ liegt, nicht jedoch den erhöhten Maximalstrom I'ₘₐₓ erreicht, wird es entsprechend länger dauern, bis die Spannung am Ausgang der Integratorschaltung 85 den zweiten Vergleichswert überschreitet. Entsprechend kann ein nicht so hoher Ausgangsstrom I_{A} im Fehlerfall länger fließen, bis das Schaltnetzteil 1 vom erhöhten Maximalstrom I'ₘₐₓ auf den regulären Maximalstrom I'ₘₐₓ abregelt. Damit ergibt sich eine Zeitabhängigkeit des maximal gelieferten Ausgangsstroms, der von der Ausgangsstromhöhe I_{A} abhängig ist.

Diese Charakteristik kommt einer Auslösung einer Schmelzsicherung oder eines thermisch oder magnetisch arbeitenden Überlastschalters, die oder der dem Schaltnetzteil 1 nachgeschaltet ist, zugute. Bei einem sehr hohen, beispielsweise dem 10-fachen Nennstrom der Sicherung entsprechenden Strom wird eine kürzere Zeit zur Auslösung der Sicherung benötigt, als bei einem geringeren, beispielsweise nur dem 5-fachen Nennstrom der Sicherung entsprechenden Strom. Da die thermische Belastung bei einem weniger hohen Maximalstrom für das Schaltnetzteil 1 geringer ist als bei einem höheren Maximalstrom, kann das Schaltnetzteil 1 diese Zeitcharakteristik bieten, ohne dass die Gefahr einer thermischen Überlastung des Schaltnetzteils 1 während der Lieferung des erhöhten Maximalstroms besteht.

Die Zeitcharakteristik der Strombegrenzerschaltung ermöglicht auch das Treiben von Lasten mit hohem Anlaufstrom wie dies typischerweise bei Motorlasten oder kapazitiven Lasten gegeben ist. Ein Motoranlaufstrom im Bereich von beispielsweise dem 2,5-fachen des Nennstromes des Schaltnetzteils 1 kann dann im Vergleich zum Kurzschlussfall mit einem Überstrom der 10-fachen Höhe des Nennstroms entsprechend länger bereitgestellt werden.

Wenn, entweder durch Auslösen der nachgeschalteten Sicherung oder durch ein Beheben des Fehlerfalls, der Ausgangsstrom I_{A} am Ausgang des Schaltnetzteils 1 wieder unter den regulären Maximalstrom I'ₘₐₓ abfällt, erfolgt eine Entladung des Kondensators 855 über die weitere Diode 854 und den Entladewiderstand 853. Wenn der Kondensator 855 unter den zweiten Vergleichswert entladen ist, steht in einem nächsten Fehlerfall wiederum zunächst der erhöhte Maximalstrom I'ₘₐₓ zur Verfügung. Die Zeitkonstante für die Entladung kann durch Wahl des Widerstands 853 so gewählt sein, dass eine zweite Lieferung eines erhöhten Maximalstroms durch das Schaltnetzteil 1 erst dann erfolgen kann, wenn sich das Schaltnetzteil 1 auch wieder ausreichend abgekühlt hat. Die Zeitkonstante für das Entladen des Kondensators 855 ist daher bevorzugt an typische Zeitkonstanten des Abkühlens des Schaltnetzteils 1 angepasst.

Fig. 3 zeigt in gleicher Weise wie Fig. 2 ein weiteres Ausführungsbeispiel eines Teils der Regelschaltung 8 eines erfindungsgemäßen Schaltnetzteils 1. Gleiche oder gleichwirkende Elemente sind in diesem Ausführungsbeispiel mit gleichen Bezugszeichen versehen. Vom Grundaufbau her entspricht die in Fig. 2 dargestellte Schaltung der in Fig. 2 gezeigten, auf deren Beschreibung hiermit verwiesen wird.

Im Unterschied zum Ausführungsbeispiel der Fig. 2 ist im Entladezweig der Integratorschaltung 85 in der Reihenschaltung der weiteren Diode 854 und dem Entladewiderstand 853 ein zusätzlicher Entladewiderstand 857 angeordnet, der einen temperaturabhängigen Widerstandswert aufweist, und insbesondere durch einen PTC (positive temperature coefficient) -Widerstand gebildet ist. Der zusätzliche Entladewiderstand 857 ändert seinen Widerstandswert in Abhängigkeit einer Temperatur des Schaltnetzteils 1, insbesondere einer Temperatur eines Bauelementes, dessen Temperatur sich lastabhängig stark ändert, beispielsweise der Temperatur der ausgangsseitigen Gleichrichterstufe 6. Die Zeitkonstante für das Entladen des Kondensators 855 wird somit temperaturabhängig. Bei einer höheren Temperatur des Schaltnetzteils 1 bzw. des Bauelements, mit dem der zusätzliche Entladewiderstand 857 im thermischen Kontakt steht, wird die Zeitkonstante für das Entladen des Kondensators 855 verlängert. Damit verlängert sich bei erhöhter Temperatur des Schaltnetzteils 1 die für das Schaltnetzteil 1 zur Verfügung stehende Regenerationszeit, innerhalb der das Schaltnetzteil 1 keinen erhöhten Maximalstrom I'ₘₐₓ liefern kann.

### Bezugszeichenliste

- 1: Schaltnetzteil
- 2: Gleichrichter
- 3: Glättungsbaugruppe
- 4: Schaltstufe
- 41: Schaltorgan
- 5: Transformator
- 6: ausgangsseitiger Gleichrichter
- 7: ausgangsseitige Glättungsbaugruppe
- 8: Regelschaltung
- 81: Stromsensor
- 82: Auswerteverstärker
- 83: erste Vergleichsstufe
- 84: zweite Vergleichsstufe
- 85: Integratorschaltung
- 86: Optokoppler
- 831: Operationsverstärker
- 832 bis 834: Widerstand
- 841: Operationsverstärker /Vergleicher
- 842,843: Widerstand
- 851: Ladewiderstand
- 852: Diode
- 853: Entladewiderstand
- 854: weitere Diode
- 855: Kondensator
- 9: PWM-Schaltung
- 10: Last

- C₁, C₂: Glättungskondensator

- U_{E}: Eingangsspannung
- U_{A}: Ausgangsspannung
- U₁: Gleichspannung
- U₂: Primärspannung
- U₃: Sekundärspannung
- U_{ref}: Referenzspannung
- GND: Bezugspotential

- I: Primärseite des Transformators / des Netzteils
- II: Sekundärseite des Transformators / des Netzteils
- Iₙₑₙₙ: Ausgangsnennstrom
- I'ₘₐₓ: regulärer Maximalstrom
- I'ₘₐₓ: erhöhter Maximalstrom

## Patentansprüche

1. Stromversorgungseinrichtung zum Umwandeln einer Eingangsspannung (U_{E}) in eine Ausgangsspannung (U_{A}), aufweisend zumindest eine von einer Pulsweitenmodulationsschaltung (9) getaktet angesteuerte Schaltstufe (4), wobei eine Regelschaltung (8) vorgesehen ist, die auf die Pulsweitenmodulationsschaltung (9) zur Änderung der Höhe der Ausgangsspannung (U_{A}) einwirkt, und wobei eine Strombegrenzungsschaltung vorgesehen ist, die einen Ausgangsstrom (I_{A}) der Stromversorgungseinrichtung nach Überschreiten eines Schwellenwertes zunächst für einen Zeitraum auf einen erhöhten Maximalstrom (I'ₘₐₓ) begrenzt und danach auf einen regulären Maximalstrom (Iₘₐₓ) begrenzt, wobei die Strombegrenzungsschaltung eine erste Vergleichsstufe (83) aufweist, die eine zum Ausgangsstrom (I_{A}) proportionale Spannung mit einem ersten Vergleichswert vergleicht, wobei der erste Vergleichswert der Höhe des aktuellen Maximalstroms entspricht, **dadurch gekennzeichnet, dass** die Regelschaltung (8) so eingerichtet ist, dass der Zeitraum, für den der Ausgangsstrom (I_{A}) auf den erhöhten Maximalstrom (I'ₘₐₓ) begrenzt ist, umso länger ist, je kleiner die Differenz des Ausgangsstroms (I_{A}) zum Schwellenwert während des Zeitraums ist, und dass eine Integratorschaltung (85) vorhanden ist, über die die zum Ausgangsstrom (I_{A}) proportionale Spannung gefiltert einer zweiten Vergleichsstufe (84) zugeführt wird, die die gefilterte Spannung mit einem zweiten Vergleichswert vergleicht, der dem regulären Maximalstrom (I'ₘₐₓ) entspricht, wobei ein Ausgang der zweiten Vergleichsstufe (84) derart mit der ersten Vergleichsstufe (83) gekoppelt ist, dass er die Höhe des ersten Vergleichswerts beeinflusst.

2. Stromversorgungseinrichtung nach Anspruch 1, bei der die Integratorschaltung (85) einen Kondensator und zumindest einen Lade- und/oder Entladewiderstand in einer Tiefpassanordnung aufweist.

3. Stromversorgungseinrichtung nach Anspruch 1, bei der die Integratorschaltung (85) einen Ladewiderstand mit einer in Reihe geschalteten Diode und ein Entladewiderstand mit einer in Reihe geschalteten weiteren Diode aufweist, wobei die beiden Reihenschaltungen im Hinblick auf die Diode bzw. die weitere Diode antiparallel zueinander geschaltet sind.

4. Stromversorgungseinrichtung nach Anspruch 3, bei der in der Reihenschaltung des Entladewiderstand und der weiteren Diode zusätzlich ein temperaturabhängiger Widerstand, insbesondere ein PTC-Widerstand, angeordnet ist.

5. Stromversorgungseinrichtung nach einem der Ansprüche 1 bis 4, bei der eine Eingangsspannung (U_{EIN}) im Bereich von 10 - 800V, insbesondere 15 - 265V, vorgesehen ist.

6. Stromversorgungseinrichtung nach einem der Ansprüche 1 bis 5, ausgebildet als ein Schaltnetzteil (1) zur Umwandlung einer Eingangswechselspannung in eine Ausgangsgleichspannung.

7. Stromversorgungseinrichtung nach einem der Ansprüche 1 bis 6, bei der der erhöhte Maximalstrom (I'ₘₐₓ) zwischen dem 5- fachen und dem 10-fachen eines Nennstroms (Iₙₑₙₙ) liegt und der reguläre Maximalstrom (Iₘₐₓ) zwischen dem 1,1-fachen und dem 1,5-fachen des Nennstroms (Iₙₑₙₙ) liegt.

8. Stromversorgungseinrichtung nach einem der Ansprüche 1 bis 7, bei der der Schwellenwert auf den Wert des regulären Maximalstroms (Iₘₐₓ) gesetzt ist.

9. Verfahren zum Begrenzen eines Ausgangsstroms (I_{A}) einer Stromversorgungseinrichtung, insbesondere nach einem der Ansprüche 1 bis 8, mit den folgenden Schritten:
- Einstellen einer Strombegrenzung für den Ausgangsstrom (I_{A}) auf einen erhöhten Maximalstrom (I'ₘₐₓ);
- Erfassen eines über einem Schwellenwert liegenden Ausgangsstroms (I_{A});
- Liefern eines oberhalb des Schwellenwerts aber unterhalb der Höhe des erhöhten Maximalstroms liegende Ausgangsstrom (I_{A}) für einen Zeitraum, dessen Länge von der Höhe des erfassten Ausgangsstroms (I_{A}) abhängt;
- Einstellen der Strombegrenzung für den Ausgangsstrom (I_{A}) auf einen regulären Maximalstrom (lmax), der kleiner ist als der erhöhte Maximalstrom (I'ₘₐₓ), und
- Einstellen der Strombegrenzung nach einem weiteren Zeitraum wiederum auf den erhöhten Maximalstrom (I'ₘₐₓ).

10. Verfahren nach Anspruch 9, bei dem die Dauer des weiteren Zeitraums von der Höhe des erfassten Ausgangsstroms (I_{A}) während der Zeit abhängt, in der die Strombegrenzung auf den regulären Maximalstrom (Iₘₐₓ) eingestellt ist.

11. Verfahren nach Anspruch 9 oder 10, bei dem eine Dauer des Zeitraums und ggf. des weiteren Zeitraums durch eine Integration einer den Ausgangsstrom repräsentierenden Spannung erfolgt.

## Claims

1. A power supply device for converting an input voltage (U_{E}) into an output voltage (U_{A}), comprising at least one switching stage (4) controlled by a pulse-width modulation circuit (9) in a clocked manner, wherein a control circuit (8) is provided, which influences the pulse-width modulation circuit (9) so as to change the level of the output voltage (U_{A}), and wherein a current limiting circuit is provided which, after a threshold has been exceeded, limits an output current (I_{A}) of the power supply device first to an elevated maximum current (I'ₘₐₓ) for a period of time and thereafter to a regular maximum current (Iₘₐₓ), wherein the current limiting circuit comprises a first comparison stage (83), which compares a voltage that is proportional to the output current (I_{A}) with a first reference value, wherein the first reference value corresponds to the level of the present maximum current, **characterized in that** the control circuit (8) is configured such that the period of time, for which the output current (I_{A}) is limited to the elevated maximum current (I'ₘₐₓ), is longer, the smaller the difference is between the output current (I_{A}) and the threshold value during the period of time and that there is an integrator circuit (85), via which the voltage that is proportional to the output current (I_{A}) is supplied filtered to a second comparison stage (84), which compares the filtered voltage with a second reference value that corresponds to the regular maximum current (I'ₘₐₓ), wherein an output of the second comparison stage (84) is coupled to the first comparison stage (83) in such a way that it influences the level of the first reference value.

2. The power supply device according to claim 1, in which the integrator circuit (85) comprises a capacitor and at least one charging and/or discharging resistor in a low-pass assembly.

3. The power supply device according to claim 1, in which the integrator circuit (85) comprises a charging resistor having a series-connected diode and a discharging resistor having an additional series-connected diode, wherein the two series circuits are connected to one another antiparallel with respect to the diode or the additional diode.

4. The power supply device according to claim 3, in which a temperature-dependent resistor, in particular a PTC resistor, is also arranged in the series circuit of the discharging resistor and the additional diode.

5. The power supply device according to any one of claims 1 to 4, in which an input voltage (U_{EIN}) ranging from 10 to 800 V, in particular 15 to 265 V, is provided.

6. The power supply device according to any one of claims 1 to 5, embodied as a switched-mode power supply device (1) for converting an input alternating current voltage into an output direct current voltage.

7. The power supply device according to any one of claims 1 to 6, in which the elevated maximum current (I'ₘₐₓ) is between 5 and 10 times a nominal current (Iₙₑₙₙ), and the regular maximum current (Iₘₐₓ) is between 1.1 and 1.5 times the nominal current (Iₙₑₙₙ).

8. The power supply device according to any one of claims 1 to 7, in which the threshold value is set to the value of the regular maximum current (Iₘₐₓ).

9. A method for limiting an output current (I_{A}) of a power supply device, in particular according to any one of claims 1 to 8, comprising the following steps:
- adjusting a current limitation for the output current (I_{A}) to an elevated maximum current (I'ₘₐₓ);
- detecting an output current (I_{A}) that is above a threshold value;
- supplying an output current (I_{A}) that is above the threshold value but is below the level of the elevated maximum current for a period of time, the length of which is dependent on the level of the detected output current (I_{A});
- adjusting the current limitation for the output current (I_{A}) to a regular maximum current (Iₘₐₓ) which is lower than the elevated maximum current (I'ₘₐₓ), and
- adjusting the current limitation to the elevated maximum current (I'ₘₐₓ) once an additional period of time has elapsed.

10. The method according to claim 9, in which the duration of the additional period of time is dependent on the level of the detected output current (I_{A}) during the time in which the current limitation is set to the regular maximum current (Iₘₐₓ).

11. The method according to claim 9 or 10, in which a duration of the period of time and optionally of the additional period of time is determined by an integration of a voltage that represents the output current.

## Revendications

1. Dispositif d'alimentation en courant pour convertir une tension d'entrée (U_{E}) en une tension de sortie (U_{A}), présentant au moins un étage de commutation (4) commandé de manière cadencée par un circuit de modulation de largeur d'impulsion (9), dans lequel est prévu un circuit de régulation (8) qui agit sur le circuit de modulation de largeur d'impulsion (9) pour modifier le niveau de la tension de sortie (U_{A}), et dans lequel est prévu un circuit de limitation de courant qui, après dépassement d'une valeur seuil, limite un courant de sortie (I_{A}) du dispositif d'alimentation en courant d'abord à un courant maximal augmenté (I'ₘₐₓ) pendant un laps de temps, puis le limite à un courant maximal normal (Iₘₐₓ), le circuit de limitation de courant présentant un premier étage de comparaison (83) qui compare une tension proportionnelle au courant de sortie (I_{A}) avec une première valeur de comparaison, la première valeur de comparaison correspondant au niveau du courant maximum actuel, **caractérisé en ce que** le circuit de régulation (8) est conçu de telle sorte que le laps de temps pendant lequel le courant de sortie (I_{A}) est limité au courant maximal augmenté (I'ₘₐₓ) est d'autant plus long que la différence entre le courant de sortie (I_{A}) et la valeur seuil pendant le laps de temps est petite, et qu'un circuit intégrateur (85) est présent, par lequel la tension proportionnelle au courant de sortie (I_{A}) est filtrée et amenée à un deuxième étage de comparaison (84) qui compare la tension filtrée avec une deuxième valeur de comparaison qui correspond au courant maximal normal (I'ₘₐₓ), une sortie du deuxième étage de comparaison (84) étant couplée au premier étage de comparaison (83) de telle sorte qu'elle influence le niveau de la première valeur de comparaison.

2. Dispositif d'alimentation en courant selon la revendication 1, dans lequel le circuit intégrateur (85) présente un condensateur et au moins une résistance de charge et/ou de décharge en montage passe-bas.

3. Dispositif d'alimentation en courant selon la revendication 1, dans lequel le circuit intégrateur (85) présente une résistance de charge avec une diode montée en série et une résistance de décharge avec une autre diode montée en série, les deux circuits série étant montés antiparallèlement l'un à l'autre en ce qui concerne la diode ou l'autre diode.

4. Dispositif d'alimentation en courant selon la revendication 3, dans lequel une résistance variable en fonction de la température, en particulier une résistance CTP, est disposée en plus dans le circuit série de la résistance de décharge et de l'autre diode.

5. Dispositif d'alimentation en courant selon l'une des revendications 1 à 4, dans lequel une tension d'entrée (U_{EIN}) dans la plage de 10 à 800 V, en particulier de 15 à 265 V, est prévue.

6. Dispositif d'alimentation en courant selon l'une des revendications 1 à 5, réalisé sous la forme d'une alimentation à découpage (1) pour convertir une tension d'entrée alternative en une tension de sortie continue.

7. Dispositif d'alimentation en courant selon l'une des revendications 1 à 6, dans lequel le courant maximal augmenté (I'ₘₐₓ) est compris entre 5 et 10 fois un courant nominal (Iₙₑₙₙ) et le courant maximal normal (Iₘₐₓ) entre 1,1 et 1,5 fois le courant nominal (Iₙₑₙₙ).

8. Dispositif d'alimentation en courant selon l'une des revendications 1 à 7, dans lequel la valeur seuil est fixée à la valeur du courant maximal normal (Iₘₐₓ).

9. Procédé de limitation d'un courant de sortie (I_{A}) d'un dispositif d'alimentation en courant, en particulier selon l'une des revendications 1 à 8, comprenant les étapes suivantes :
- réglage d'une limitation de courant pour le courant de sortie (I_{A}) à un courant maximal augmenté (I'ₘₐₓ) ;
- détection d'un courant de sortie (I_{A}) supérieur à une valeur seuil ;
- délivrance d'un courant de sortie (I_{A}) qui est supérieur à la valeur seuil mais inférieur au niveau du courant maximal augmenté pendant un laps de temps dont la longueur dépend du niveau du courant de sortie (I_{A}) détecté ;
- réglage de la limitation de courant pour le courant de sortie (I_{A}) à un courant maximal normal (Iₘₐₓ) inférieur au courant maximal augmenté (I'ₘₐₓ), et
- après un autre laps de temps, réglage de la limitation de courant à nouveau au courant maximal augmenté (I'ₘₐₓ).

10. Procédé selon la revendication 9, dans lequel la durée de l'autre laps de temps dépend du niveau du courant de sortie (I_{A}) détecté pendant le temps dans lequel la limitation de courant est réglée au courant maximal normal (Iₘₐₓ).

11. Procédé selon la revendication 9 ou 10, dans lequel une durée du laps de temps et, éventuellement, de l'autre laps de temps est obtenue par intégration d'une tension représentative du courant de sortie.
